(19) Europäisches Patentamt
European Patent Office
Office européen des brevets

(11) Publication number: 0 309 414 A2

# (12) EUROPEAN PATENT APPLICATION

(21) Application number: 88830349.2

(51) Int. Cl.$^4$: A 23 G 3/30

(22) Date of filing: 26.08.88

(30) Priority: 28.08.87 IT 4833687 22.10.87 IT 4852587

(43) Date of publication of application: 29.03.89 Bulletin 89/13

(84) Designated Contracting States: AT BE CH DE ES FR GB GR LI LU NL SE

(71) Applicant: AVANTGARDE S.p.A.
Via Treviso, 4 Casella Postale 196
I-00040 Pomezia RM (IT)

(72) Inventor: Cavazza, Paolo
Viale dell'Umanesimo, 178
I-00144 Roma (IT)

Fiorentini, Giulio
Viale dell'Umanesimo, 303
I-00144 Roma (IT)

(74) Representative: Cavattoni, Fabio et al
Cavattoni & Raimondi Viale dei Parioli, 160
I-00197 Roma (IT)

## (54) Chewing gum having antitartar activity.

(57) A chewing gum composition endowed with antitartar activity is disclosed, the composition comprising a chewing gum base and an amount of an active principle sufficient to induce an antitartar effect, the active principle being selected from the neutral and acidic alkali and alkaline-earth metal polyphosphates (particularly the pyrophosphates and metaphosphates) and the alkaline-earth metal citrates and malates, and mixtures thereof.

EP 0 309 414 A2

## Description

### Chewing gum having antitartar activity

The present invention relates to a chewing gum composition having antitartar activity.

Tartar is a deposit which accumulates around the neck of teeth, growing and hardening on the bacterial plaque particularly near the orifices of the salivary ducts, on the buccal surfaces of the maxillary molars and the lingual surfaces of the mandibular anterior teeth.

Tartar consists of calcareous concretions (mainly calcium phosphate), epithelial cells desquamated from the buccal mucosa and microbial colonies of the oral cavity bacterial flora.

Calcium ions are present in saliva, wherein from 200 millions to 1 billion of bacteria per ml live together; the salivary origin of calcium is shown by the more widespread presence of tartar behind the incisors where is the duct of the submandibular gland and where the duct of the parotid gland opens on the vestibular surface of the maxillary second molar.

Therefore, tartar accumulates on the first bacterial plaque and only the plaque removal can eliminate the tartar and prevent its re-formation.

Tartar deposition prevailingly depends on the saliva pH variations, the saliva saturation degree, the increase in calcium ions brought about by the decomposition of foodstuffs containing them, and also on further mechanisms that have not been wholly understood so far.

The removal of the first bacterial plaque by the dentist is the most effective measure to be adopted; however, it would be very useful to prevent or at least counteract tartar formation by proper oral hygiene based on the daily, regular use of suitable tooth-pastes and medicated chewing gums.

The applicants have now suitably developed a medicated chewing gum having antitartar activity, insofar as a chewing gum presents the remarkable advantages over a tooth-paste of providing a gradual release of the active ingredient and warranting a longer-lasting contact between the active ingredient and the relevant tooth structures whilst, at the same time, the chewing gum performs its usual massaging action on the gums.

Whereas medicated chewing gums for preventing tooth decay which comprise fluorinated compounds as active ingredients are known and are available on the market, the applicants are not aware of chewing gums endowed with antitartar activity.

The present invention provides a chewing gum composition having anti-tartar activity which comprises a chewing gum base and is characterized in that it also comprises an amount of an active ingredient sufficient to induce an antitarter effect selected from the neutral and acidic alkali and alkaline-earth metal polyphosphates, the alkaline-earth metal citrates and malates, and mixtures thereof.

Pursuant to the present invention, by "polyphosphates" the following compounds are meant

1. Straight chain polyphosphates of general formula (I)

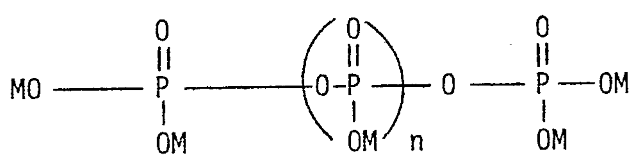

(I)

wherein M is an alkali metal, preferably sodium or potassium, or is one-half equivalent of an alkaline-earth metal, preferably calcium, or is hydrogen; and

n is an integer from 0 to $10^5$.

The following are particularly preferred:

(a)when n = 0, the dimer phosphates of formula

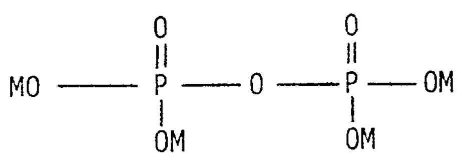

Among these, particularly preferred are the neutral and acidic pyrophosphates such as tetrasodium pyrophosphate, disodium dihydrogen pyrophosphate, tetrapotassium pyrophosphate, dipotassium dihydrogen pyrophosphate and calcium pyrophosphate;

(b) when n = 1, the tripolyphosphates (or triphosphates) of formula

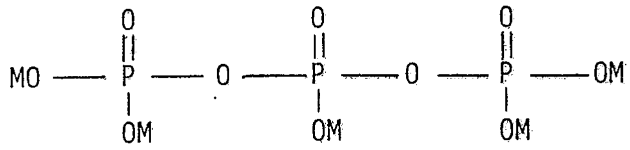

Among these, particularly preferred are $K_5P_3O_{10}$ and $Na_5P_3O_{10}$;

(c) among the polyphosphates wherein $n = 4\text{-}10^5$ the following metaphosphates are particularly preferred:

$(NaPO_3)_{10-15}$
$(NaPO_3)_{50-100}$
$(NaPO_3)_{100-500}$, and
$(KPO_3)_{400-20,000}$ (Karoll's salt)

2. The cyclic polyphosphates having three phosphorous atoms having the formula

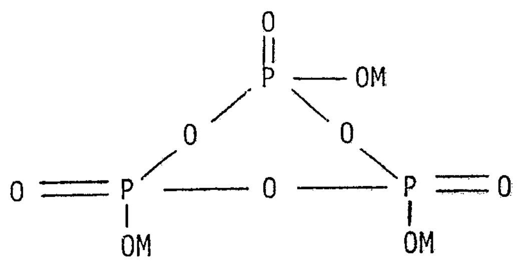

among which sodium trimetaphosphate $(NaPO_3)_3$, known as Maddrell's salt is preferred, and those having four phosphorous atoms having the formula

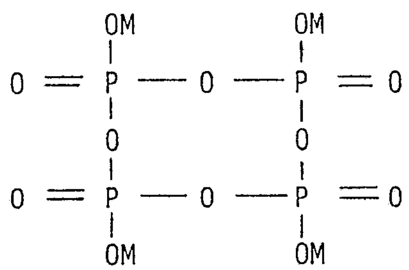

particularly sodium tetrametaphosphate.

The polyphosphates are not absorbed in the intestinal tract; their absorption can take place upon hydrolysis thereof into phosphates. Subsequently, they are salified with calcium and excreted in the stools.

Polyphosphates are present in many foodstuffs as preservatives and as agents for adjusting their taste and appearance. Used amounts vary from 0.2 to 1.8%

The daily dose which can be safely administered to human beings has been fixed in 70 mg/kg of body weight, calculated as total phosphorous. The amounts used in the compositions of the present invention are markedly below this threshold.

It has been found that the optimum amount of polyphosphates, citrates or malates is comprised between 0.01 and 5% by weight calculated on the composition weight.

Some examples of compositions are illustrated hereinbelow. Their preparation is carried out via the conventional procedures and equipments normally used for preparing chewing gums. In the examples percentages are by weight of the overall composition.

EXAMPLE 1

| | |
|---|---|
| NSTA synthetic chewing gum base | 28 |
| Sorbitol, powder | 37 |
| 70% sorbitol solution | 16 |
| Mannitol, powder | 14 |
| Spearmint oil | 1.2 |

Sodium fluoride 0.018
Saccharin 0.15
Menthol 0.500
Glycerol 1.6
Potassium sorbate 0.15
Tetrasodium pyrophosphate 0.75

EXAMPLE 2
NSTA synthetic chewing gum base 28
Sorbitol, powder 37
70% sorbitol solution 16
Mannitol, powder 14
Spearmint oil 1.2
Sodium fluoride 0.018
Saccharin 0.15
Menthol 0.500
Glycerol 1.6
Potassium sorbate 0.15
Tetrasodium pyrophosphate 0.28
Disodium pyrophosphate 0.22

EXAMPLE 3
NSTA synthetic chewing gum base 28
Sorbitol, powder 37
Mannitol, powder 14
Spearmint oil 1.2
Sodium fluoride 0.018
Saccharin 0.15
Menthol 0.500
Glycerol 1.6
Potassium sorbate 0.15
Disodium pyrophosphate 0.22
Tetrapotassium pyrophosphate 0.28
Sorbitol solution balance to 100

EXAMPLE 4
Sodium metaphosphate ($Na_3P_3O_9$) 0.8
Sodium monofluorophosphate 0.75
Menthol 0.3
Saccharin 0.5
Peppermint oil 0.8
Anethole 0.15
Glycerol 2
Potassium sorbate 0.15
Sorbitol, powder 35
Manitol, powder 14
NSTA synthetic chewing gum base 27
Sorbitol solution balance to 100

EXAMPLE 5
Sodium metaphosphate, Maddrell's salt 0.8
Sodium metaphosphate ($Na_3P_3O_9$) 0.08
Sodium monofluorophosphate 0.75
Menthol 0.15
Saccharin 0.30
Peppermint oil 0.80
Anethole 0.15
Glycerol 2
Potassium sorbate 0.15
Sorbitol, powder 35
Mannitol, powder 14
NSTA chewing gum base 27
Sorbitol solution balance to 100

EXAMPLE 6

| | |
|---|---|
| Zinc citrate | 0.50 |
| Sodium fluoride | 0.02 |
| Menthol | 0.50 |
| Peppermint oil | 0.60 |
| Anethole | 0.20 |
| Saccharin | 0.15 |
| Glycerol | 2 |
| Potassium sorbate | 0.15 |
| Sorbitol, powder | 30 |
| Mannitol | 20 |
| Chewing gum base | 25 |
| Sorbitol solution | balance to 100 |

EXAMPLE 7

| | |
|---|---|
| Sodium metaphosphate, Maddrell's salt | 0.50 |
| Zinc citrate | 0.50 |
| Sodium fluoride | 0.02 |
| Menthol | 0.50 |
| Peppermint oil | 0.60 |
| Anethole | 0.20 |
| Saccharin | 0.15 |
| Glycerol | 2 |
| Potassium sorbate | 0.15 |
| Sorbitol, powder | 30 |
| Mannitol | 20 |
| Chewing gum base | 25 |
| Sorbitol solution | balance to 100 |

EXAMPLE 8

| | |
|---|---|
| Sodium metaphosphate, Maddrell's salt | 1 |
| Zinc citrate | 1 |
| Sodium fluoride | 0.02 |
| Menthol | 0.50 |
| Peppermint oil | 0.60 |
| Anethole | 0.20 |
| Saccharin | 0.15 |
| Glycerol | 2 |
| Potassium sorbate | 0.15 |
| Sorbitol, powder | 30 |
| Mannitol | 20 |
| Chewing gum base | 25 |
| Sorbitol solution | balance to 100 |

EXAMPLE 9

| | |
|---|---|
| Sodium metaphosphate, Maddrell's salt | 2 |
| Sodium monofluorophosphate | 0.8 |
| Saccharin | 0.15 |
| Mint extract | 1.1 |
| Glycerol | 1 |
| Potassium sorbate | 0.15 |
| Sorbitol, powder | 35 |
| Mannitol, powder | 16 |
| Chewing gum base | 24 |
| Plasticizer gum | 2 |
| Sorbitol solution | balance to 100 |

EXAMPLE 10

| | |
|---|---|
| Tetrasodium pyrophosphate | 3 |
| Sodium monofluorophosphate | 0.8 |
| Saccharin | 0.15 |
| Mint extract | 1.1 |
| Glycerol | 1 |
| Potassium sorbate | 0.15 |
| Sorbitol, powder | 35 |

| | |
|---|---|
| Mannitol, powder | 16 |
| Chewing gum base | 24 |
| Plasticizer gum | 2 |
| Sorbitol solution | balance to 100 |

EXAMPLE 11

| | |
|---|---|
| Tetrapotassium pyrophosphate | 2 |
| Disodium pyrophosphate | 1 |
| Sodium monofluorophosphate | 0.8 |
| Saccharin | 0.15 |
| Mint extract | 1.3 |
| Anethole | 0.2 |
| Glycerol | 1 |
| Potassium sorbate | 0.15 |
| Sorbitol, powder | 35 |
| Mannitol, powder | 16 |
| Chewing gum base | 24 |
| Plasticizer gum | 2 |
| Sorbitol solution | balance to 100 |

EXAMPLE 12

| | |
|---|---|
| Tetrasodium pyrophosphate | 1.5 |
| Disodium pyrophosphate | 1.5 |
| Sodium monofluorophosphate | 0.8 |
| Saccharin | 0.15 |
| Mint extract | 1.3 |
| Anethole | 0.2 |
| Glycerol | 1 |
| Potassium sorbate | 0.15 |
| Sorbitol, powder | 35 |
| Mannitol, powder | 16 |
| Chewing gum base | 24 |
| Plasticizer gum | 2 |
| Sorbitol solution | balance to 100 |

## Claims

1. A chewing gum composition having antitartar activity comprising a chewing gum base and an amount of an active principle sufficient to induce an antitartar effect selected from the neutral and acidic alkali and alkaline-earth metal polyphosphates and the alkali and alkaline-earth metal citrates and malates and mixtures thereof.

2. The chewing gum composition of claim 1, wherein said polyphosphates are selected from the neutral and acidic alkali and alkaline-earth metal pyrophosphates and the alkali metal metaphosphates.

3. The chewing gum composition of claim 2, wherein the neutral and acidic alkali metal pyrophosphates are selected from tetrasodium pyrophosphate, disodium dihydrogen pyrophosphate, tetrapotassium pyrophosphate, dipotassium dihydrogen pyrophosphate and calcium pyrophosphate.

4. The chewing gum composition of claim 2, wherein the metaphosphates are selected from sodium trimetaphosphate and Maddrell's salt.

5. The chewing gum composition of claim 1, wherein the alkaline-earth metal citrate is zinc citrate.

6. The chewing gum composition of claim 1, wherein the alkaline-earth metal malate is calcium malate.

7. The chewing gum composition of anyone of the preceding claims which comprises from 0.01% to 5% by weight of polyphosphate, citrate or malate.

8. A chewing gum composition according to anyone of the formulations of Examples 1 through 12 inclusive.